Europäisches Patentamt

European Patent Office

Office européen des brevets

(11) Publication number: **0 062 989**
**A2**

(12) # EUROPEAN PATENT APPLICATION

(21) Application number: **82301572.2**

(22) Date of filing: **25.03.82**

(51) Int. Cl.³: **C 08 J 9/30**
**C 08 L 9/08**

(30) Priority: **10.04.81 GB 8111333**

(43) Date of publication of application:
**20.10.82 Bulletin 82/42**

(84) Designated Contracting States:
**BE DE FR NL**

(71) Applicant: **DUNLOP LIMITED**
**Dunlop House Ryder Street St. James's**
**London SW1Y 6PX(GB)**

(72) Inventor: **Bourne, Alan John**
**16 Glebe Fields**
**Curdworth West Midlands(GB)**

(72) Inventor: **Prichards, Robert John**
**30 Launceston Road**
**Walsall West Midlands(GB)**

(72) Inventor: **Wood, Kenneth**
**2 Summerbridge Crescent**
**Bradford West Yorkshire(GB)**

(74) Representative: **Waller, Roy Ernest Sykes et al,**
**Group Patent Department Dunlop Limited 2 Parade**
**Sutton Coldfield West Midlands B72 1PF(GB)**

(54) Latex foam rubbers.

(57) A latex foam rubber which is non-self-propagating when subjected to the "cigarette" test (B.S.S. 5852, Part I, 1979) is produced from a formulation containing from 10 to 25 parts by weight natural rubber, from 75 to 100 parts by weight S/B rubber, accelerators, fillers and elemental sulphur. The level of elemental sulphur is 1 part by weight or less per hundred parts rubber. Restriction of the sulphur level, especially in foam rubbers containing relatively large amounts of S/B rubber, leads to a product which passes the said B.S.S. test, where a mere conventional amount of sulphur (e.g. 2-2.5 parts) would lead to failure. Any slight deterioration in the physical properties of the product can be redressed by including up to 25 phr (e.g. 10-15 phr) of polystyrene or a "high-styrene" S/B resin latex in the formulation.

## LATEX FOAM RUBBERS

This invention relates to latex foam rubbers and in particular to latex foam rubbers which will pass the "cigarette" test defined in British Standard Specification No. 5852; Part I; 1979.

Latex foam rubbers are widely used in the manufacture of better-quality upholstery articles, especially furniture cushions, generally in combination with one or more layers of a covering material. While covering materials which are resistant to smouldering are known, it is desirable that the underlying foam rubber material should also be non-smouldering, particularly as various countries have already introduced (or propose to introduce) legislation requiring that all such upholstery articles shall pass the said "cigarette" test.

Foam rubbers derived mainly or wholly from latices of natural rubber are satisfactorily resistant to smouldering, but these materials tend to be relatively expensive. The less expensive synthetic latex foam rubbers, (which are more readily available both in terms of price and supply), are not themselves resistant to smouldering and tend to form a self-propagating char on subjection to the "cigarette" test.

It has been proposed (see U.K. Patent Specification No. 970,493) to incorporate relatively high amounts of waxes or oils into a latex formulation in order to overcome this problem. However, such additives tend to migrate out of the foam rubber (causing staining of the cover) and may moreover be allergenic.

It is common practice to use sulphur in an amount of $2 - 2\frac{1}{2}$ parts per hundred parts total rubber as a curative for latices. However, when such amounts are used in foam rubber containing high proportions of styrene/butadiene polymer the resultant foam rubber fails the "cigarette" test.

We have, surprisingly, found that the level of sulphur may be substantially reduced in the latex formulation, resulting in foam rubbers which, under the conditions of the said "cigarette" test, are non-self-propagating. Although it would be expected that this reduction in sulphur content would bring about a marked deterioration in the physical properties of the foam rubbers, we have found that the effect of lowering the sulphur content on the properties is comparatively slight.

Latex foam rubbers produced in accordance with the present invention have been found to exhibit adequate physical properties (especially compression modulus). Moreover, any slight deterioration in physical properties can readily be redressed by the addition of small amounts of a resin (e.g. polystyrene) or a reinforcing latex (e.g. "high-styrene" styrene/butadiene resin latex).

Accordingly, the present invention provides a latex foam rubber derived from a formulation comprising from 0 to 25 parts by weight of natural rubber, from 75 to 100 parts by weight of styrene/butadiene rubber, one or more accelerators, one or more fillers and elemental sulphur, in which the maximum proportion of elemental sulphur in the formulation is 1 part by weight per 100 parts total rubber, the said latex foam rubber being non-self-propagating when subjected to the "cigarette" test defined in British Standard Specification No. 5852; Part I, 1979.

The proportions by weight of natural rubber to styrene/butadiene rubber in the formulation can be, for example, 20:80 or 10:90.

The accelerator can be, for example, zinc diethyl-dithiocarbamate (ZEDC), zinc mercaptobenzthiazole (ZMBT) (suitably a mixture of ZEDC and ZMBT in equal proportions by weight), or other accelerators conventionally used for latex foam rubbers and well known to those skilled in the art.

Preferred fillers include the hydrated aluminas and the aluminium silicates.

The elemental sulphur may be incorporated in the latex formulation as sulphur per se (in a form which is soluble in the foam matrix). Alternatively, sulphur-donor compounds such as dimorpholinodisulphide (available from Monsanto as SULFASAN R) or dipentamethylene thiuram tetrasulphide (available from Robinson Bros. as ROBAC P25) may be used.

(The words SULFASAN and ROBAC are Registered Trade Marks).

If necessary, up to 25 parts (preferably 10 to 15 parts) per 100 parts total rubber of polystyrene or a "high-styrene" styrene/butadiene resin latex may be added to the formulation to compensate for any slight deterioration of the physical properties of the foam rubber caused by the reduction in the level of elemental sulphur in the formulation.

If small amounts of an oil were to be used in the foam rubber formulation, the level of sulphur could be marginally increased.

The present invention will be illustrated, merely by way of example, as follows:

CONTROL EXAMPLE

A latex mix was compounded to the formulation shown in TABLE A (below), ingredients being added in the order listed.

TABLE A

| Note (v.i.) | Ingredient | Amount (parts by dry weight) |
|---|---|---|
| (a) | styrene/butadiene polymer | 90 |
| (b) | potassium oleate | 1 |
| (c) | natural rubber | 10 |
| (d) | sulphur | 2.5 |
| (e) | antioxidant | 1 |
| (f) | alumina hydrate | 40 |
| (g) | zinc mercaptobenzthiazole | 1 |
| (h) | zinc diethyldithiocarbamate | 1 |

Notes  (a)  as 63% total solids styrene/butadiene latex, available as CIAGO 2550 H33 from B.F. Goodrich, Chemical, Europe B V.

(b)  15% aqueous solution.

(c)  as 60% natural rubber concentrate.

(d)  50% dispersion in water.

(e)  available from Hubron Rubber Chemicals as WINGSTAY S and believed to consist

essentially of a styrenated phenol - used as a 50% aqueous emulsion.

(f)    available from British Alumina Company Limited as BACO FRF 20.

(g)    50% dispersion in water.

(h)    50% dispersion in water.

(The words WINGSTAY and BACO are Registered Trade Marks).

After the mix had been matured overnight at ambient temperature, a 200 g portion was placed in the bowl of a KitchenAid Model 4C laboratory mixer. Ammonia (0.2 php, 35% aqueous solution) was added and the mix frothed at mixer speed 8 for 90 seconds. Zinc oxide (3.0 php, 50% dispersion in water) was incorporated at speed 4, followed 30 seconds later by diphenylguanidine (0.5 php, 40% dispersion in water). After a further 30 seconds sodium silicofluoride (5.0 php, 50% dispersion in water) was added and stirring continued for one minute before refining at speed 2 for a further minute. The foam was then poured into a suitable mould and the mould lid closed. After gelation, the moulded foam rubber was kept at ambient temperature for 7 minutes before being placed in a steam oven for 30 minutes to effect vulcanisation. The latex foam rubber was demoulded, washed and dried (postcured) for 3 hours at 105$^{\circ}$C in a circulating air oven. The foam rubber was covered with a material comprising 48% acrylic fibres, 35% cotton fibres and 17% viscose fibres and having a weight of 0.387 Kg/m$^2$.*

* Available from NBS & Co Limited as DRALON (Registered Trade Mark) under design No S175.

After 9 minutes exposure to a lighted cigarette, self-propagating charring of the covered foam rubber was observed with considerable smoke evolution. Extensive damage was observed after about 20 minutes. The foam rubber continued to smoke vigorously after the cigarette was consumed and clearly it failed the test.

EXAMPLE 1

The formulation shown in TABLE B (below) was made up as described with reference to the CONTROL EXAMPLE.

TABLE B

| Note (v.i. | Ingredient | Amounts (parts by weight) |
|---|---|---|
| (a) | Styrene/butadiene polymer | 90 |
| (b) | Potassium oleate | 1 |
| (c) | Natural rubber | 10 |
| (d) | Sulphur | 1 |
| (e) | Antioxidant | 1 |
| (f) | Alumina hydrate | 40 |
| (g) | Zinc mercaptobenzthiazole | 0.5 |
| (h) | Zinc diethyldithiocarbamate | 0.5 |

For Notes, see CONTROL EXAMPLE (above).

In contrast to the foam rubber of the CONTROL EXAMPLE, the foam rubber of EXAMPLE 1 did not exhibit vigorous smoke evolution and indeed smoking ceased completely after 21 minutes (the cigarette was consumed after 18 minutes). Charring was restricted closely to the area of contact with the cigarette.

EXAMPLE 2

This was similar to EXAMPLE 1 except that 10 php of polystyrene (Ciago Latex H9) was incorporated into the basic mix to improve compression hardness characteristics of the resultant foam rubber. It passed the cigarette test.

EXAMPLES 3 to 11

The formulations, of which the "main" ingredients only are shown in TABLE C (below), were made into foam rubbers by the method described with reference to the CONTROL EXAMPLE and subjected to the "cigarette" test.

TABLE C

| EXAMPLE NO. | 3 | 4 | 5 | 6 | 7 | 8 | 9 | 10 | 11 |
|---|---|---|---|---|---|---|---|---|---|
| "Main"ingredient | (all amounts are parts by dry weight) | | | | | | | | |
| Natural Rubber | 10 | 10 | 10 | 10 | 10 | 10 | 10 | 10 | 10 |
| Styrene/ butadiene polymer | 90 | 90 | 90 | 90 | 90 | 90 | 90 | 90 | 90 |
| Alumina Hydrate | 40 | 40 | 40 | 40 | 40 | 40 | 40 | 40 | 40 |

TABLE B - cont'd

| EXAMPLE NO. | 3 | 4 | 5 | 6 | 7 | 8 | 9 | 10 | 11 |
|---|---|---|---|---|---|---|---|---|---|
| Sulphur | 0.75 | 0.75 | 0.75 | 0.75 | 0.75 | 1 | 1 | 1 | 1 |
| Zinc diethyl-dithio-carbamate | 0.5 | 1.0 | 1.5 | 3.0 | 5.0 | - | - | - | - |
| Zinc mercapto-benz-thiazole | 0.5 | 1.0 | 1.5 | - | - | - | - | 0.5 | 0.25 |
| ZBUDX (i) | - | - | - | - | - | 1 | 2 | 1 | 1 |
| Polystyrene (j) | - | - | - | - | - | - | - | 10 | 10 |
| RESULT OF "CIGARETTE" TEST | Pass | Pass | Pass | Pass | Fail | Pass | Fail | Pass | Pass |

Notes to TABLE C

(i)   A complex of zinc dibutyldithiocarbamate and dibutylamine

(j)   Available as CIAGO Latex H9.

These results demonstrate the effect not only of sulphur levels but also of the amount of accelerator on the performance of foam rubbers when subjected to the "cigarette" test.

EXAMPLES 12 to 19

The formulations, of which the "main" ingredients only are shown in TABLE D (below), were made into foam rubbers by the method described with reference to the CONTROL EXAMPLE and subjected to the "cigarette" test.

TABLE D

| EXAMPLE NO. | 12 | 13 | 14 | 15 | 16 | 17 | 18 | 19 |
|---|---|---|---|---|---|---|---|---|
| "Main" Ingredient | (all amounts are parts by dry weight) | | | | | | | |
| Natural rubber | 10 | 10 | 10 | 10 | 10 | 10 | 10 | 10 |
| Styrene/butadiene polymer | 90 | 90 | 90 | 90 | 90 | 90 | 90 | 90 |

TABLE D – cont'd

| EXAMPLE NO | 12 | 13 | 14 | 15 | 16 | 17 | 18 | 19 |
|---|---|---|---|---|---|---|---|---|
| Alumina Hydrate | 40 | 40 | 40 | 40 | 40 | 40 | 40 | 40 |
| Sulphur * Donor I (k) | 4 | 3 | 2 | 2 | 2 | – | – | – |
| Sulphur * Donor II (l) | – | – | – | – | – | 2.5 | 2.5 | 2.5 |
| Zinc diethyl-dithiocarbamate | 0.5 | 0.5 | 0.5 | 0.5 | 1 | 1 | 3 | 1.5 |
| Zinc mercapto-benzthiazole | – | – | – | 0.5 | – | 1 | – | 1.5 |
| Polystyrene | 10 | 10 | 10 | 10 | 10 | 10 | 10 | 10 |
| RESULT OF "CIGARETTE" TEST | Fail | Fail | Pass | Pass | Pass | Pass | Pass | Pass |

Notes to TABLE D

(k)  Dipentamethylene thiuram tetrasulphide, available from Robinson Bros, as ROBAC P25.

(l)  Dimorpholine disulphide, available from Monsanto as SULFASAN R.

*  The calculated values of available free sulphur are equivalent to less than 1 php of free sulphur.

EXAMPLES 20 TO 28

The formulations, of which the "main" ingredients only are shown in TABLE E (below), were made into foam rubber by the Talalay process and subjected to the cigarette test. (The Talalay process is described in "Latex Foam Rubber" by E.W. Madge, published by Maclaren and Sons in 1962).

TABLE E

| EXAMPLE NO | 20 | 21 | 22 | 23 | 24 | 25 | 26 | 27 | 28 |
|---|---|---|---|---|---|---|---|---|---|
| "Main" Ingredient | (all amounts are parts by dry weight) | | | | | | | | |
| Natural Rubber | 20 | 20 | 20 | 20 | 20 | 20 | 20 | 20 | 20 |
| Styrene/ )Type I (m) | 80 | 80 | 80 | 80 | 80 | – | – | – | – |
| Butadiene )Type II (n) | – | – | – | – | – | 80 | 80 | – | – |
| Polymer )TypeIII (o) | – | – | – | – | – | – | – | 80 | 80 |
| Aluminium silicate (p) | 40 | 40 | 40 | 40 | 40 | 40 | 40 | 40 | 40 |
| Sulphur | 2.25 | 0.5 | 0.75 | 0.5 | 0.5 | 0.5 | 0.75 | 1.5 | 1.0 |
| Zinc diethyl-dithiocarbamate | 2.5 | 0.5 | 1.0 | 0.5 | 0.5 | 1.0 | – | 1.0 | 1.0 |
| Mercaptobenzthiazole | 1.125 | 0.5 | 0.5 | 0.5 | 0.5 | 0.5 | 0.5 | 0.5 | 0.5 |
| Zinc ethyl phenyl-dithiocarbamate | – | – | – | – | – | – | 1.0 | – | – |
| Polystyrene (q) | – | – | – | 10 | – | – | – | – | – |
| High styrene resin(r) | – | – | – | – | 10 | – | – | – | – |
| Process oil (s) | 3.0 | 3.0 | 3.0 | 3.0 | 3.0 | 3.0 | 3.0 | 3.0 | 3.0 |
| RESULT OF "CIGARETTE" TEST | Fail | Pass | Pass | Pass | Pass | Pass | Pass | Fail | Pass |

8.

NOTES TO TABLE E

(m)  CIAGO 2550 H33 (See TABLE A)

(n)  A highly-reinforced styrene/butadiene latex,
available as CIAGO 2550 H145, the principal
reinforcing agent  being polystyrene.

(o)  A highly-reinforced styrene/butadiene latex,
available as ANIC 5576, the principal reinforcing
agent being a high-styrene resin.

(p)  A powdered feldspar available from Lawton Minerals
Limited as ABRA 180.  (ABRA is a Registered Trade
Mark).

(q)  CIAGO 2500 H9 (See TABLE C).

(r)  Available from Goodyear Chemical Division as
PLIOLITE 151 latex.  (PLIOLITE is a Registered
Trade Mark).

(s)  Available from Shell (U.K.) Limited as EDELEX 27.

CLAIMS:

1.      A, latex foam rubber which is non-self-propagating when subjected to the "cigarette" test defined in British Standard Specification No. 5852; Part I, 1979 and which has been produced from a formulation comprising natural rubber and/or styrene/butadiene rubber, <u>characterised in that</u> the formation also contains one or more accelerators, one or more fillers and elemental sulphur, and that the formulation contains from 0 to 25 parts by weight of natural rubber and from 75 to 100 parts by weight of styrene/butadiene rubber, and that the maximum amount of elemental sulphur present in the formulation is 1 part by weight per 100 parts by weight total rubber (phr).

2.      A latex foam rubber according to Claim 1, <u>characterised in that</u> the formulation contains 20 parts natural rubber and 80 parts styrene/butadiene rubber.

3.      A latex foam rubber according to Claim 1, <u>characterised in that</u> the formulation contains 10 parts natural rubber and 90 parts styrene/butadiene rubber.

4.      A latex foam rubber according to Claim 1, 2 or 3, <u>characterised in that</u> the accelerator is zinc diethyl-dithiocarbamate, zinc mercaptobenzthiazole, or a mixture thereof.

5.      A latex foam rubber according to any one of Claims 1 to 4, <u>characterised in that</u> the filler is a hydrated aluminium compound or an aluminium silicate.

6.      A latex foam rubber according to any one of Claims 1 to 5, <u>characterised in that</u> the elemental sulphur comprises sulphur <u>per se</u> and is incorporated in the formulation in a form which is soluble in the foam matrix (e.g. a 50% aqueous dispersion).

7.      A latex foam rubber according to any one of Claims 1 to 5, <u>characterised in that</u> the elemental sulphur is derived from a sulphur-donor compound (e.g. dimorpholinodisulphide or dipentamethylene thiuram tetrasulphide) present in the formulation.

8.      A latex foam rubber according to any one of Claims 1 to 7, <u>characterised in that</u> the formulation also contains an effective amount of up to 25 phr (preferably 10 to
15 phr) of polystyrene or a "high-styrene" styrene/
butadiene resin latex.